(19) Europäisches Patentamt
European Patent Office
Office européen des brevets

(11) **EP 3 613 801 B1**

(12) **EUROPEAN PATENT SPECIFICATION**

(45) Date of publication and mention
of the grant of the patent:
**01.03.2023 Bulletin 2023/09**

(21) Application number: **18787777.4**

(22) Date of filing: **09.04.2018**

(51) International Patent Classification (IPC):
**C08J 9/18** (2006.01)

(52) Cooperative Patent Classification (CPC):
**C08J 9/0061; C08J 9/122; C08J 9/18; C08J 9/232;**
C08J 2203/06; C08J 2323/10

(86) International application number:
**PCT/JP2018/014964**

(87) International publication number:
**WO 2018/193901 (25.10.2018 Gazette 2018/43)**

(54) **POLYPROPYLENE RESIN FOAMED PARTICLES AND METHOD FOR PRODUCING SAME**

GESCHÄUMTE POLYPROPYLENHARZTEILCHEN UND VERFAHREN ZUR HERSTELLUNG
DAVON

PARTICULES EXPANSÉES DE RÉSINE DE POLYPROPYLÈNE ET LEUR PROCÉDÉ DE
PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.04.2017 JP 2017084721**

(43) Date of publication of application:
**26.02.2020 Bulletin 2020/09**

(73) Proprietor: **Kaneka Corporation
Osaka-shi, Osaka 530-8288 (JP)**

(72) Inventors:
• **MOCHIZUKI, Yoshiyuki
Settsu-shi, Osaka 566-0072 (JP)**

• **ITOI, Akihiro
Settsu-shi, Osaka 566-0072 (JP)**

(74) Representative: **Vossius & Partner
Patentanwälte Rechtsanwälte mbB
Siebertstrasse 3
81675 München (DE)**

(56) References cited:
JP-A- H07 300 537    JP-A- 2007 308 577
JP-A- 2008 255 286    JP-A- 2008 266 478
JP-A- 2010 209 145    JP-A- 2013 035 949
JP-A- 2013 035 949    US-A- 4 676 939
US-A1- 2015 210 815    US-A1- 2016 319 095

**Description**

Technical Field

The present invention relates to polypropylene-based resin expanded particles and a method for producing the polypropylene-based resin expanded particles.

Background Art

An in-mold foamed molded product is obtained by filling a mold with polypropylene-based resin expanded particles and subjecting the polypropylene-based resin expanded particles to heat-molding. The in-mold foamed molded product thus obtained has characteristics such as formability into any shape, a lightweight property, and a heat insulating property, which characteristics are advantages of the in-mold foamed molded product. Further, in comparison with an in-mold foamed molded product obtained with the use of a similar synthetic resin expanded particles, the in-mold foamed molded product obtained with the use of the polypropylene-based resin expanded particles is superior in chemical resistance, heat resistance, and strain recovery rate after compression to an in-mold foamed molded product obtained with the use of polystyrene-based resin expanded particles. In addition, the in-mold foamed molded product obtained with the use of the polypropylene-based resin expanded particles is superior in dimension accuracy, heat resistance, and compressive strength to an in-mold foamed molded product obtained with the use of polyethylene-based resin expanded particles.

Having the above characteristics, the in-mold foamed molded product obtained with the use of the polypropylene-based resin expanded particles is used for various purposes, for example, for heat insulating materials, shock-absorbing packing materials, automobile interior materials and automobile bumper core materials.

Such an in-mold foamed molded product is in general used as a white in-mold foamed molded product reflecting the color of a polypropylene-based resin to which no pigment is added, or as a black in-mold foamed molded product reflecting the color of a polypropylene-based resin to which carbon black or the like is added as a pigment. In accordance with a recent increase in range of applications of the in-mold foamed molded product as described above, various products have been developed. From the viewpoint of functionality with which scratches and stains are difficult to notice and the viewpoint of design for making such products distinct from conventional products, there are increasing demands for gray in-mold foamed molded products which are neither white nor black. A method for obtaining gray resin expanded particles may be arranged to use a small amount of black additive, such as carbon black, which is added to a white resin. However, in this method, only a small amount of black additive such as carbon black is added, and it is difficult to uniformly disperse the black additive in the white resin. Accordingly, the gray resin expanded particles have had unevenly colored surfaces such as spotted surfaces. As a result, it has been difficult to obtain gray resin expanded particles whose color is uniform and excellent in color tone.

Patent Literature 1 discloses an invention for obtaining gray polyolefin-based resin expanded particles by adding a small amount of carbon black. However, the gray polyolefin-based resin expanded particles disclosed in Patent Literature 1 include gray polyolefin-based resin expanded particles which are unevenly colored. Therefore, the gray polyolefin-based resin expanded particles disclosed in Patent Literature 1 are not sufficient for stably obtaining gray polyolefin-based resin expanded particles whose color is uniform and excellent in color tone.

Patent Literature 2 discloses an invention for obtaining polyolefin-based resin expanded particles to which carbon black and a metal salt hydrate are added. Patent Literature 2 discloses an invention for causing flame retardancy to be exhibited, by not only using carbon black but also blending an inexpensive flame retarder. However, Patent Literature 2 discloses nothing about obtaining gray polyolefin-based resin expanded particles whose color is uniform and excellent in color tone.

Patent Literature 3 discloses an invention for obtaining polypropylene-based resin expanded particles to which carbon black and a metal borate are added. Though Patent Literature 3 discloses an effect of eliminating color unevenness, Patent Literature 3 discloses nothing about obtaining gray polypropylene-based resin expanded particles which have an excellent color tone.

Patent Literature 4 discloses an invention for obtaining polyolefin-based resin expanded particles to which a magnesium salt of higher fatty acid is added. Though Patent Literature 4 discloses an invention for obtaining expanded particles which have a large cell diameter and which are excellent in in-mold moldability, Patent Literature 4 discloses nothing about obtaining gray polyolefin-based resin expanded particles whose color is uniform and excellent in color tone.

Patent Literature 5 discloses an invention for obtaining an in-mold foamed molded product which is made from a polyolefin-based resin to which carbon black and a fatty acid salt are added. Though Patent Literature 5 discloses an invention for obtaining, by injection molding, an in-mold foamed molded product whose color is uniform, Patent Literature 5 discloses nothing about obtaining gray expanded particles which have an excellent color tone.

Patent literature 6 refers to a specific method for producing polypropylene-based resin pre-expanded particles.

Patent literature 7 relates to certain polyolefin resin foamed particles and a corresponding in-mold foam molding method. Magnesium hydroxide is employed in comparative examples of these documents.

Citation List

[Patent Literature]

[Patent Literature 1]
Japanese Patent Application Publication Tokukaihei No. 7-300537 (1995)
[Patent Literature 2]
Japanese Patent Application Publication Tokukai No. 2013-35949
[Patent Literature 3]
Japanese Patent Application Publication Tokukai No. 2008-266478
[Patent Literature 4]
Japanese Patent Application Publication Tokukaihei No. 06-192462 (1994)
[Patent Literature 5]
Japanese Patent Application Publication Tokukai No. 2009-019203
[Patent Literature 6]
US 2015/0210815 A1
[Patent Literature 7]
JP 2013-035949 A.

Summary of Invention

Technical Problem

An object of an embodiment of the present invention is to provide polypropylene-based resin expanded particles which make it possible to obtain a gray in-mold foamed molded product whose color is uniform and excellent in color tone.

Solution to Problem

The inventors of the present invention have found that surprisingly, gray polypropylene-based resin expanded particles having an excellent color tone can be obtained by expanding, with the use of carbon dioxide as an expanding agent, polypropylene-based resin particles which contain carbon black and magnesium hydroxide and/or magnesium carbonate. Specifically, an embodiment of the present invention is arranged as follows:

[1] A method for producing polypropylene-based resin expanded particles, including the steps of:

(i) obtaining a dispersion slurry by dispersing polypropylene-based resin particles and carbon dioxide into an aqueous dispersion medium in a closed vessel, the polypropylene-based resin particles containing not less than 1.0 part by weight and not more than 25 parts by weight of carbon black, and not less than 0.05 parts by weight and not more than 1.0 part by weight of one or both of magnesium hydroxide and magnesium carbonate with respect to 100 parts by weight of a polypropylene-based resin;
(ii) heating and pressurizing the dispersion slurry; and
(iii) releasing the polypropylene-based resin particles contained in the dispersion slurry, into a region at a pressure lower than an internal pressure of the closed vessel.

[2] Polypropylene-based resin expanded particles, including:

not less than 1.0 part by weight and not more than 25 parts by weight of carbon black, and not less than 0.05 parts by weight and not more than 1.0 part by weight of one or both of magnesium hydroxide and magnesium carbonate with respect to 100 parts by weight of a polypropylene-based resin, the polypropylene-based resin expanded particles having a surface color satisfying the following (a), (b), and (c):

(a) RGB (Max) $\leq$ 230, where RGB (Max) represents a highest value among values of R, G and B;
(b) RGB (Min) $\geq$ 70, where RGB (Min) represents a lowest value among the values of R, G and B; and

(c)

$$RGB\ (Max)\ -\ RGB\ (Min)\ \le\ 20.$$

Advantageous Effects of Invention

An embodiment of the present invention provides polypropylene-based resin expanded particles which make it possible to obtain a gray in-mold foamed molded product whose color is uniform and excellent in color tone.

Brief Description of Drawings

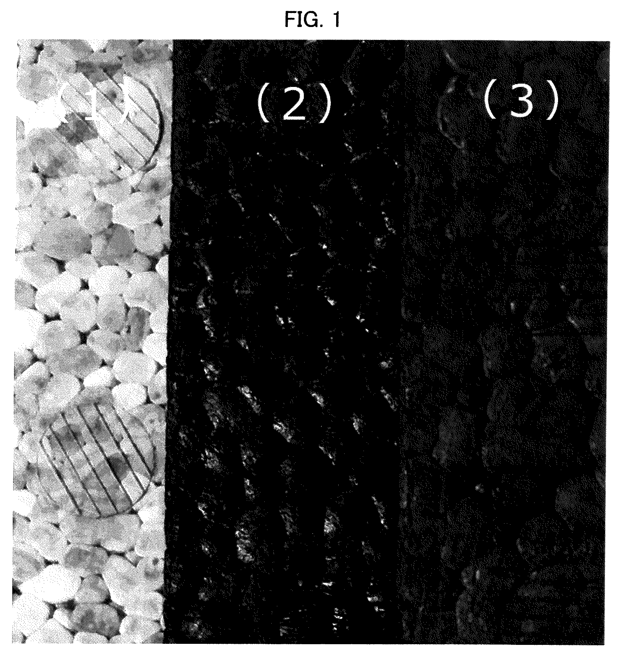

(1) of Fig. 1 is a picture showing the color of a surface of an in-mold foamed molded product which is obtained in Comparative Example 2 of the present application. (2) of Fig. 1 is a picture showing the color of a surface of an in-mold foamed molded product which is obtained in Comparative Example 1 of the present application. (3) of Fig. 1 is a picture showing the color of a surface of an in-mold foamed molded product which is obtained in Example 1 of the present application.

Description of Embodiments

Polypropylene-based resin expanded particles in accordance with an embodiment of the present invention includes: not less than 1.0 part by weight and not more than 25 parts by weight of carbon black, and not less than 0.05 parts by weight and not more than 1.0 part by weight of magnesium hydroxide and/or magnesium carbonate with respect to 100 parts by weight of a polypropylene-based resin, the polypropylene-based resin expanded particles having a surface color satisfying the following (a), (b), and (c):

(a) RGB (Max) $\le$ 230, where RGB (Max) represents a highest value among values of R, G and B;
(b) RGB (Min) $\ge$ 70, where RGB (Min) represents a lowest value among the values of R, G and B; and
(c)

$$RGB\ (Max)\ -\ RGB\ (Min)\ \le\ 20.$$

Further, polypropylene-based resin expanded particles in accordance with an embodiment of the present invention are obtained by expanding, with the use of carbon dioxide as an expanding agent, polypropylene-based resin particles which contain not less than 1.0 part by weight of carbon black, and not less than 0.05 parts by weight and not more than 1.0 part by weight of magnesium hydroxide and/or magnesium carbonate with respect to 100 parts by weight of a polypropylene-based resin. The polypropylene-based resin expanded particles thus obtained exhibit a uniform gray color which is excellent in color tone. Further, it is possible to obtain an in-mold foamed molded product which has an excellent surface appearance with the use of the polypropylene-based resin expanded particles in accordance with an embodiment of the present invention. Note that in the present specification, "polypropylene-based resin expanded particles" are also referred to as "expanded particles", and "in-mold foamed molded product" is also referred as "molded product".

The polypropylene-based resin which is used as a base resin in an embodiment of the present invention is not particularly limited, provided that the polypropylene-based resin contains propylene as a main component of a monomer. Examples of the polypropylene-based resin encompass propylene homopolymers, olefin-propylene-based random copolymers, and olefin-propylene block copolymers. These polypropylene-based resins can be used individually, or two or more of these polypropylene-based resins can be used in combination. The polypropylene-based resin which is used in an embodiment of the present invention contains a copolymerizable olefin, which is not particularly limited. Examples of the copolymerizable olefin encompass an olefin having 2 or not less than 4 carbon atoms. Specific examples of the copolymerizable olefin encompass ethylene, and $\alpha$-olefins such as 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene. Examples of the copolymerizable olefin also encompass: cyclic olefins such as cyclopentene, norbornene, and tetracyclo[6,2,11,8,13,6]-4-dodecene; and dienes such as 5-methylene-2-norbornene, 5-ethylidene-2-norbornene, 1,4-hexadiene, methyl-1,4-hexadiene, and 7-methyl-1,6-octadiene. These olefins having 2 or not less than 4 carbon atoms can be used individually, or two or more of these olefins can be used in combination.

Among others, ethylene or an $\alpha$-olefin is preferable and ethylene or 1-butene is the most preferable, in view of availability, economic efficiency, and mechanical characteristics.

The polypropylene-based resin which is used in an embodiment of the present invention contains the copolymerizable olefin in an amount of preferably not less than 0% by weight and not more than 10 weight%, more preferably not less than 1.0% by weight and not more than 7.0% by weight, still more preferably not less than 1.5 weight% and not more than 6.0 weight%, and particularly preferably not less than 1.5% by weight and 5.0 weight% or less. If the amount of the copolymerizable olefin contained in the polypropylene-based resin is in the above ranges, a resultant polypropylene-based resin in-mold foamed molded product is likely to have a favorable moldability and a favorable mechanical strength.

The polypropylene-based resin which is used in an embodiment of the present invention can be further copolymerized with, for example, a vinyl monomer such as vinyl chloride, vinylidene chloride, acrylonitrile, vinyl acetate, acrylic acid, methacrylic acid, maleic acid, ethyl acrylate, butyl acrylate, methyl methacrylate, maleic anhydride, styrene, methylstyrene, vinyltoluene, or divinylbenzene, provided that the object of an embodiment of the present invention is attained. Among the above polypropylene-based resins, in view of favorable foamability, resistance to brittleness at low temperature, low cost, etc., it is possible to suitably use an olefin-propylene-based random copolymer containing ethylene and/or 1-butene, such as an ethylene-propylene random copolymer, a 1-butene-propylene random copolymer, or an ethylene-1-butene-propylene random copolymer.

The polypropylene-based resin which is used in an embodiment of the present invention is not particularly limited in melting point, and has a melting point of preferably not lower than 130°C and not higher than 160°C, and more preferably not lower than 140°C and not higher than 155°C. If the melting point of the polypropylene-based resin is in the above ranges, a resultant in-mold foamed molded product is likely to have an excellent balance between mechanical strength and surface appearance.

The melting point of the polypropylene-based resin in an embodiment of the present invention is a temperature corresponding to an endothermic peak on a differential scanning calorimeter (DSC) curve, which is obtained with the use of a differential scanning calorimeter DSC when not less than 1 mg and not more than 10 mg of the polypropylene-based resin or the polypropylene-based resin particles are (I) heated from 40°C to 220°C at a temperature increase rate of 10°C/min, (II) then, cooled from 220°C to 40°C at a temperature decrease rate of 10°C/min, and (III) subsequently, heated again from 40°C to 220°C at a temperature increase rate of 10°C/min.

The polypropylene-based resin which is used in an embodiment of the present invention has a melt flow rate (hereinafter also referred to as "MFR") of preferably not less than 3.0 g/10 min and not more than 12 g/10 min, and more preferably not less than 5.0 g/ 10 min and not more than 9.0 g/10 min. If the melt flow rate of the polypropylene-based resin is in the above ranges, a resultant in-mold foamed molded product is likely to deform less and to have a beautiful surface appearance.

The MFR in an embodiment of the present invention is measured with the use of an MFR measuring instrument described in JIS-K7210 and under the following conditions: an orifice having a diameter of 2.0959 mm$\varphi$ $\pm$ 0.005 mm$\varphi$ and a length of 8.000 mm $\pm$ 0.025 mm, a load of 2160 g, and a temperature of 230°C $\pm$ 0.2°C.

The polypropylene-based resin which is used in an embodiment of the present invention can be produced with the use of a catalyst such as a Ziegler catalyst, a metallocene catalyst, and a post-metallocene catalyst. In a case where a Ziegler catalyst is used, a resultant polymer is likely to have a large Mw/Mn.

The polypropylene-based resin which is used in an embodiment of the present invention has properties, such as a molecular weight and the melt flow rate, which properties can be adjusted by oxidative decomposition of the polypropylene-based resin with the use of an organic peroxide. The oxidative decomposition of the polypropylene-based resin can be carried out by, for example, heating and melting, in an extruder, the polypropylene-based resin to which an organic peroxide has been added.

The carbon black which is used in an embodiment of the present invention is not particularly limited in primary particle diameter. Generally, the primary particle diameter of the carbon black is preferably more than 0 nm and not more than 500 nm. In view of a balance between flame retardancy and mechanical strength of a resultant in-mold foamed molded product, the primary particle diameter of the carbon black is more preferably not less than 10 nm not more than 100 nm. Specific examples of the carbon black encompass channel black, roller black, disk, gas furnace black, oil furnace black, thermal black, and acetylene black. These kinds of carbon black can be used individually, or two or more of these kinds of carbon black can be used in combination.

The primary particle diameter of the carbon black in accordance with an embodiment of the present invention is obtained as follows. First, a cross-section of a cell film of a polyolefin-based resin expanded particle obtained is magnified 40,000 times with the use of a transmission electron microscope and a picture of the cross-section thus magnified is taken. Then, in the picture thus obtained with the use of the transmission electron microscope, particle diameters (Feret diameters) of arbitrary selected 50 carbon black primary particles are measured in X and Y directions. Subsequently, an average value of the particle diameters is calculated, and the average value thus calculated is defined as the primary particle diameter of the carbon black.

The carbon black is contained in an amount of not less than 1.0 part by weight and not more than 25 parts by weight, with respect to 100 parts by weight of the polypropylene-based resin. The amount of the carbon black is preferably not less than 2.0 parts by weight and not more than 20 parts by weight, more preferably not less than 2.0 parts by weight and not more than 15 parts by weight, still more preferably not less than 2.0 parts by weight and not more than 10 parts by weight, and most preferably not less than 2.0 parts by weight and not more than 8.0 parts by weight. If the amount of the carbon black is less than 1.0 part by weight, color unevenness of the polypropylene-based resin expanded particle tends to be easily-noticeable. If the amount of the carbon black is more than 25 parts by weight, flame retardancy of a resultant polypropylene-based resin in-mold foamed molded product is likely to deteriorate.

In an embodiment of the present invention, in a case where resin particles containing carbon black are prepared, it is preferable to prepare a polyolefin-based resin in which carbon black is dispersed (hereinafter, referred to as "carbon black masterbatch"), and then to melt and knead, with the polypropylene-based resin, the carbon black in the form of the carbon black masterbatch. Examples of the polyolefin-based resin which is used in the carbon black masterbatch encompass polyethylene-based resins and polypropylene-based resins. The polyolefin-based resins are preferably polypropylene-based resins. The polypropylene-based resin which is used in the carbon black masterbatch is preferably selected from the above-described polypropylene-based resins any of which is used in an embodiment of the present invention. The polypropylene-based resin has an MFR of preferably not less than 3.0 g/ 10 min and not more than 15 g/ 10 min, and more preferably not less than 5.0 g/10 min and not more than 9.0 g/ 10 min. If the MFR is in the above ranges, the carbon black masterbatch is likely to have a good kneading property for kneading with the polypropylene-based resin which is used in an embodiment of the present invention.

The carbon black masterbatch has a carbon black concentration of preferably not less than 5.0% by weight and not more than 60% by weight and more preferably not less than 20% by weight and not more than 50% by weight. It is possible to add a stabilizer and/or a lubricant to the carbon black masterbatch.

The carbon black masterbatch can be produced by melting and kneading the polyolefin-based resin and the carbon black, with the use of an extruder, a kneader, a Banbury mixer (registered trademark), a roller, or the like.

The magnesium hydroxide and the magnesium carbonate which are used in an embodiment of the present invention are each not particularly limited, provided that the magnesium hydroxide and the magnesium carbonate are available. The magnesium hydroxide and the magnesium carbonate which are used in an embodiment of the present invention are not limited in primary particle diameter. The primary particle diameter of the magnesium hydroxide and the primary particle diameter of the magnesium carbonate each are generally more than 0.01 $\mu$m and not more than 50 um. From the viewpoint of (A) dispersibility of the magnesium hydroxide and the magnesium carbonate into the polypropylene-based resin and (B) formation of a uniform bubble structure in the polypropylene-based resin expanded particles, the primary particle diameter of the magnesium hydroxide and the primary particle diameter of the magnesium carbonate each are more preferably not less than 0.1 $\mu$m and not more than 10 $\mu$m.

The magnesium hydroxide and/or the magnesium carbonate in an embodiment of the present invention is/are contained in an amount of not less than 0.05 parts by weight and not more than 1.0 part by weight, with respect to 100 parts by weight of the polypropylene-based resin. The amount of the magnesium hydroxide and/or the magnesium carbonate is more preferably not less than 0.1 parts by weight and not more than 0.5 parts by weight. If the amount of the magnesium hydroxide and/or the magnesium carbonate is within the above ranges, it is possible to obtain polypropylene-based resin expanded particles which exhibit a uniform gray color which is excellent in color tone. If the amount of the magnesium hydroxide and/or the magnesium carbonate is less than 0.05 parts by weight, color unevenness of the polypropylene-based resin expanded particles tends to be easily-noticeable. If the amount of the magnesium hydroxide and/or the magnesium carbonate is more than 1 part by weight, a resultant polypropylene-based resin in-mold foamed molded product is likely to have a poorer surface appearance.

In a method for producing the polypropylene-based resin expanded particles in accordance with an embodiment of the present invention, for example, the polypropylene-based resin particles are produced first.

The method for producing the polypropylene-based resin particles in accordance with an embodiment of the present invention can be, for example, a method as described below.

First, a polypropylene-based resin, carbon black, magnesium hydroxide and/or magnesium carbonate, and if necessary, and an additive(s) are mixed by a mixing method such as a dry blending method or a masterbatch method.

Then, after a mixture thus obtained is melted and kneaded with the use of an extruder, a kneader, a Banbury mixer (registered trademark), a roller, or the like, the mixture is cut into particles with the use of a cutter, a pelletizer, or the like. As a result, the polypropylene-based resin particles are obtained.

The polypropylene-based resin particles in accordance with an embodiment of the present invention can contain, as another additive(s), a cell nucleating agent, a hydrophilic compound, an antioxidant, an antistatic agent, a flame retarder and/or the like, if necessary. It is possible to prepare in advance a masterbatch in which such an additive(s) is/are contained at a high concentration in another resin and then, to add that masterbatch resin to the polypropylene-based resin. The resin for use in such a masterbatch resin is preferably a polyolefin-based resin, and more preferably a polypropylene-based resin among polyolefin-based resins.

In an embodiment of the present invention, in a case where the hydrophilic compound is contained in the polypropylene-based resin particles, water in an aqueous dispersion medium also serves as an expanding agent, and the water serving as the expanding agent contributes to an improvement in expansion ratio of expanded particles. It is therefore preferable to contain the hydrophilic compound in the polypropylene resin particles. The hydrophilic compound for use in an embodiment of the present invention encompasses: water-absorbing ionic compounds such as sulfates, borates, and carbonates; compounds containing, in molecules thereof, a hydrophilic group such as a carboxyl group, a hydroxyl group, an amino group, a sulfo group, or a polyoxyethylene group, and derivatives thereof; and hydrophilic polymers. Specifically, examples of the compound containing a carboxyl group encompass lauric acid and sodium laurate, and examples of the compound containing a hydroxyl group encompass ethylene glycol and glycerin. Further, other examples of the hydrophilic compound encompass hydrophilic organic compounds which have a triazine ring, such as melamine (chemical name: 1,3,5-triazine-2,4,6-triamine), isocyanuric acid, and a condensate of isocyanuric acid. These hydrophilic compounds can be used individually or two or more of these hydrophilic compounds can be used in combination.

Note that the hydrophilic polymers are a polymer whose water absorption rate, which is measured in conformity to ASTM D570, is not less than 0.5% by weight. Such a hydrophilic polymer encompasses: a so-called hygroscopic polymer; a water-absorbing polymer which does not dissolve in water but absorbs water in an amount that is several times to several hundred times greater than its own weight, and which is hardly dehydrated even under pressure; and a water-soluble polymer which dissolves in water in a state at a temperature of not lower than 15°C

Specific examples of the hydrophilic polymers encompass: ionomer resins each obtained by neutralizing a carboxylic acid group of an ethylene-acrylic acid-maleic anhydride terpolymer or of an ethylene-(meth)acrylic acid copolymer, with the use of an alkali metal ion, such as a sodium ion or a potassium ion, or a transition metal ion, such as a zinc ion, and thus cross-linking molecules; carboxyl group-containing polymers such as an ethylene-(meth)acrylic acid copolymer; polyamides such as nylon-6, nylon-6,6, and a nylon copolymer; nonionic water-absorbing polymers such as polyethylene glycol and polypropylene glycol; polyether-polyolefin-based resin block copolymers such as PELESTAT (product name, manufactured by Sanyo Chemical Industries, Ltd.); and crosslinked polyethylene oxide-based polymers such as AQUA CALK (product name, manufactured by Sumitomo Seika Chemicals Co., Ltd.); and the like. These hydrophilic polymers can be used individually or two or more of these hydrophilic polymers can be used in combination.

Among the above hydrophilic polymers, the nonionic water-absorbing polymers and the polyether-polyolefin-based resin block copolymers are preferable because these have a relatively favorable dispersion stability in a pressure-resistant container and addition of a relatively small amount of these achieves a water-absorbing property.

Among those hydrophilic compounds, glycerin, polyethylene glycol, polypropylene glycol, and melamine are preferable because these bring about a great advantageous effect of the present invention.

The polypropylene-based resin expanded particles in accordance with an embodiment of the present invention contains the hydrophilic compound in an amount of preferably not less than 0.01 parts by weight and not more than 10 parts by weight, more preferably not less than 0.03 parts by weight and not more than 5 parts by weight, and further preferably not less than 0.05 parts by weight and not more than 1 part by weight, with respect to 100 parts by weight of the polypropylene-based resin. If the amount of the hydrophilic compound is in the above ranges, the expansion ratio is likely to improve and a resultant in-mold foamed molded product is likely to have a favorable appearance and a favorable mechanical strength.

General examples of the cell nucleating agent, which is used in an embodiment of the present invention, encompass inorganic nucleating agents such as talc, calcium stearate, calcium carbonate, silica, kaoline, titanium oxide, bentonite, and barium sulfate. These cell nucleating agents can be used individually or two or more of these cell nucleating agents can be used in combination. Among these cell nucleating agents, talc is preferable because uniform cells can be obtained with the use of talc. The cell nucleating agent is contained in an amount of preferably not less than 0.001 parts by weight and not more than 2 parts by weight, and more preferably not less than 0.01 parts by weight and not more than 1 part by weight, with respect to 100 parts by weight of the polypropylene-based resin. The amount of the cell nucleating agent can be appropriately adjusted depending on an intended cell diameter and a type of the cell nucleating agent. If the amount of the cell nucleating agent is in the above ranges, it is possible to easily obtain cells which are uniform and which have a size suitable for expanded particles.

The polypropylene-based resin particles in accordance with an embodiment of the present invention each have a weight of preferably not less than 0.2 mg and not more than 10 mg, and more preferably not less than 0.5 mg and not more than 6.0 mg. If the weight of each of the polypropylene-based resin particles is in the above ranges, a resultant in-mold foamed molded product is likely to have favorable dimensions and a favorable filling property.

The weight of each of the polypropylene-based resin particles refers to an average resin particle weight which is obtained from randomly selected 100 polypropylene-based resin particles.

In general, the polypropylene-based resin particles hardly change in composition and particle weight through an expansion process and an in-mold foam molding process. The polypropylene-based resin particles exhibit the same properties before and after the expanded particles or the in-mold foamed molded product is re-melted.

In an embodiment of the present invention, the polypropylene-based resin particles thus obtained are used for producing the polypropylene-based resin expanded particles.

The method for producing the polypropylene-based resin expanded particles in accordance with an embodiment of the present invention includes the following steps:

(i) obtaining a dispersion slurry by dispersing polypropylene-based resin particles and carbon dioxide into an aqueous dispersion medium in a closed vessel, the polypropylene-based resin particles containing not less than 1.0 part by weight and not more than 25 parts by weight of carbon black, and not less than 0.05 parts by weight and not more than 1.0 part by weight of magnesium hydroxide and/or magnesium carbonate with respect to 100 parts by weight of a polypropylene-based resin;
(ii) heating and pressurizing the dispersion slurry; and
(iii) releasing the polypropylene-based resin particles contained in the dispersion slurry, into a region at a pressure lower than an internal pressure of the closed vessel.

The expanding agent which is used in an embodiment of the present invention is carbon dioxide. It is possible to obtain gray polypropylene-based resin expanded particles which are excellent in color tone by expanding, with the use of carbon dioxide as an expanding agent, polypropylene-based resin particles which contain carbon black and magnesium hydroxide and/or magnesium carbonate, though a mechanism for this is currently unknown. Carbon dioxide is an environmentally-friendly inorganic gas expanding agent. When carbon dioxide is used as the expanding agent, a resultant polypropylene-based resin in-mold foamed molded product will have a favorable appearance. Therefore, carbon dioxide is suitable as the expanding agent.

It is possible to use, as the expanding agent for use in an embodiment of the present invention, inorganic gas such as air, nitrogen gas, and oxygen gas in combination with carbon dioxide, provided that such inorganic gas is used in an amount that does not impair the quality of a resultant polypropylene-based resin in-mold foamed molded product. For example, since air etc. remaining in the closed vessel which is used in expansion hardly influences the quality of a resultant polypropylene-based resin in-mold foamed molded product, the air etc. remaining in the closed vessel can be used in combination with carbon dioxide.

The method for producing the polypropylene-based resin expanded particles in accordance with an embodiment of the present invention includes, for example, a process including the steps of: (I) dispersing polypropylene-based resin particles in an aqueous dispersion medium in a closed vessel; (II) impregnating the polypropylene-based resin particles with carbon dioxide which serves as an expanding agent; (III) heating the polypropylene-based resin particles to a temperature (expansion temperature) equal to or higher than a softening temperature of the polypropylene-based resin particles; and (IV) obtaining the polypropylene-based resin expanded particles by releasing the polypropylene-based resin particles from the closed vessel into a region at a pressure lower than an internal pressure of the closed vessel. The above process is also referred to as "first-step expansion process". The polypropylene-based resin expanded particles obtained in the "first-step expansion process" as described above may be referred to as "first-step expanded particles".

In an embodiment of the present invention, the "temperature equal to or higher than a softening temperature of the polypropylene-based resin particles" means that the temperature is not lower than a temperature of [(the melting point of the polypropylene-based resin particles in use) - 10°C]. Though the polypropylene-based resin particles are not particularly limited in expansion temperature, the expansion temperature is preferably not lower than the softening temperature of the polypropylene-based resin particles. The "temperature equal to or higher than a softening temperature of the polypropylene-based resin particles" is not particularly limited, provided that the temperature is not lower than a temperature of [(the melting point of the polypropylene-based resin particles in use) - 10°C]. For example, the "temperature not less than a softening temperature of the polypropylene-based resin particles" is preferably not lower than a temperature of [(the melting point of the polypropylene-based resin particles in use) - 10°C] and more preferably not lower than a temperature of [(the melting point of the polypropylene-based resin particles in use) - 10°C] and not higher than a temperature of [(the melting point of the polypropylene-based resin particles in use) +- 10°C].

In an embodiment of the present invention, in order to adjust the expansion ratio, a temperature of an atmosphere into which the polypropylene-based resin particles are released can be adjusted to room temperature to approximately 110°C. In particular, in order to obtain expanded particles at a high expansion ratio, the temperature of the atmosphere into which the polypropylene-based resin particles are released is desirably set to approximately 110°C (e.g., 80°C to 110°C) with the use of steam or the like.

The polypropylene-based resin particles are impregnated with the expanding agent in the closed vessel in an embodiment of the present invention, at a pressure (i.e., expansion pressure) of preferably approximately not less than 1.5 MPa (gauge pressure) and not more than 5.0 MPa (gauge pressure), and more preferably approximately not less than 1.5 MPa (gauge pressure) and not more than 3.5 MPa (gauge pressure). If the expansion pressure is in the above ranges, an in-mold foamed molded product having a favorable appearance can be easily obtained. Note that the expansion pressure is a synonym for the internal pressure of the closed vessel in step (iii).

The method for producing the polypropylene-based resin expanded particles in accordance with an embodiment of the present invention specifically includes the following method.

(1) Polypropylene-based resin particles, an aqueous dispersion medium, and, as necessary, a dispersing agent, for example, are placed in a closed vessel. Thereafter, the closed vessel is vacuumized as necessary. Next, carbon dioxide is introduced as an expanding agent into the closed vessel. Then, a mixture in the closed vessel is heated to a temperature equal to or higher than the softening temperature of the polypropylene-based resin. The carbon dioxide is added as the expanding agent in an amount which is adjusted so that by heating, the internal pressure of the closed vessel will rise to approximately not less than 1.5 MPa (gage pressure) and not more than 5.0 MPa (gage pressure). If needed, carbon dioxide is further added as an expanding agent after the heating so that the pressure inside the closed vessel will be adjusted to a desired expansion pressure. Then, the mixture inside the closed vessel is held for a time longer than 0 minutes and not longer than 120 minutes, while the temperature of the mixture is finely adjusted to the expansion temperature. Subsequently, the mixture is released into the region at a pressure (in general, atmospheric pressure) lower than the internal pressure of the closed vessel whose internal temperature is adjusted to not lower than 80°C and not higher than 110°C with the use of steam or the like. As a result, the polypropylene-based resin expanded particles are obtained.

Examples of another method for introducing the expanding agent which method is different from that in the above process in an embodiment of the present invention include the following methods.

(2) A method in which the expanding agent is introduced by placing solid carbon dioxide in the form of dry ice in the closed vessel at the same time that the polypropylene-based resin particles, the aqueous dispersion medium, and, as necessary, the dispersing agent, for example are placed in the closed vessel.

(3) A method in which after the polypropylene-based resin particles, the aqueous dispersion medium, and, as necessary, the dispersing agent, for example, are placed into the closed vessel, the closed vessel is vacuumized as necessary and thereafter, while a mixture inside the closed vessel is being heated to a temperature equal to or higher than the softening temperature of the polypropylene-based resin, the expanding agent is introduced into the closed vessel.

(4) A method in which after the polypropylene-based resin particles, the aqueous dispersion medium, and, as necessary, the dispersing agent, for example, are placed into the closed vessel, the closed vessel is vacuumized as necessary and thereafter, at the time point when a mixture inside the closed vessel is heated to a temperature around the expansion temperature, the expanding agent is introduced into the closed vessel.

Note that the expansion ratio of the polypropylene-based resin expanded particle can be increased by, for example, increasing the internal pressure of the closed vessel, increasing a pressure-releasing speed, or increasing a temperature inside the closed vessel prior to release of the polypropylene-based resin particles.

The aqueous dispersion medium which is used in an embodiment of the present invention is preferably water alone, but alternatively, the aqueous dispersion medium can be a dispersion medium obtained by adding methanol, ethanol, ethylene glycol, glycerin, or the like to water.

The closed vessel accordance with an embodiment of the present invention is not particularly limited, and can be any closed vessel which is resistant to the pressure inside the closed vessel and to the temperature inside the closed vessel during production of the expanded particles. Examples of the closed vessel encompass autoclave-type pressure-resistant containers.

In an embodiment of the present invention, in the method for producing the polypropylene-based resin expanded particles, it is preferable to use a dispersing agent in the aqueous dispersion medium so as to prevent the polypropylene-based resin particles from agglomerating. Examples of the dispersing agent which is used in an embodiment of the present invention encompass inorganic dispersing agents such as tertiary calcium phosphate, tertiary magnesium phosphate, basic magnesium carbonate, calcium carbonate, barium sulfate, kaolin, talc, and clay.

These dispersing agents can be used individually or two or more of these dispersing agents can be used in combination. In an embodiment of the present invention, in the method for producing the polypropylene-based resin expanded particles, it is preferable to use a dispersion auxiliary agent in addition to the dispersing agent.

Examples of the dispersion auxiliary agent which is used in an embodiment of the present invention encompass: anionic surfactants of carboxylate type, such as N-acylamino acid salt, alkyl ether carboxylate, and acyl peptide; anionic surfactants of sulfonate type, such as alkyl sulfonate, n-paraffin sulfonate, alkyl benzene sulfonate, alkyl naphthalene sulfonate, and sulfosuccinate; anionic surfactants of sulfate ester type, such as sulfonated oil, alkyl sulfate, alkyl ether sulfate, alkyl amide sulfate, and alkyl allyl ether sulfate; and anionic surfactants of phosphate ester type, such as alkyl phosphate, and polyoxyethylene phosphate.

Examples of the dispersion auxiliary agent further encompass: polymer surfactants of polycarboxylic acid type, such as maleic acid copolymer salt and polyacrylate; and polyanionic polymer surfactants, such as polystyrene sulfonate and naphthalene sulfonic acid formalin condensate salt; and the like. These dispersion auxiliary agents can be used individually or two or more of these dispersing auxiliary agents can be used in combination.

Among others, it is preferable to use the following dispersing agent(s) and the following dispersion auxiliary agent(s) in combination: at least one dispersing agent selected from the group consisting of tertiary calcium phosphate, tertiary magnesium phosphate, barium sulfate, and kaolin; and at least one dispersion auxiliary agent selected from the group consisting of n-paraffin sodium sulfonate and alkyl benzene sulfonate.

In an embodiment of the present invention, respective amounts of the dispersing agent and the dispersion auxiliary agent vary depending on their type and a type and an amount of the polypropylene-based resin particles in use. In general, it is preferable to blend the dispersing agent in an amount of not less than 0.1 parts by weight and not more than 3 parts by weight and the dispersion auxiliary agent in an amount not less than 0.001 parts by weight and not more than 0.1 parts by weight, with respect to 100 parts by weight of the aqueous dispersion medium.

In general, it is preferable to use the polypropylene-based resin particles in an amount of not less than 20 parts by weight and not more than 100 parts by weight, with respect to 100 parts by weight of the aqueous dispersion medium so as to make the polypropylene-based resin particles favorably dispersed in the aqueous dispersion medium.

In an embodiment of the present invention, an internal pressure is applied to the first-step expanded particles by impregnating the first-step expanded particles with inorganic gas (e.g. air, nitrogen, carbon dioxide, or the like), and then the first-step expanded particles are brought into contact with steam having a certain pressure. This makes it possible to obtain polypropylene-based resin expanded particles whose expansion ratio is improved as compared to that of the first-step expanded particles. Such a process of further expanding the polypropylene-based resin expanded particles and thereby producing polypropylene-based resin expanded particles having a higher expansion ratio may be referred to as "second-step expansion process". Polypropylene-based resin expanded particles obtained through the second-step expansion process may be referred to as "second-step expanded particles".

It is desirable to appropriately change the internal pressure applied by the inorganic gas with which the first-step expanded particles are impregnated, in consideration of an expansion ratio etc. of the second-step expanded particles. The internal pressure applied by the inorganic gas is preferably not less than 0.12 MPa (absolute pressure) and not more than 0.60 MPa (absolute pressure).

Further, it is preferable to adjust a pressure of steam in the second-step expansion process to preferably not less than 0.02 MPa (gage pressure) and not more than 0.25 MPa (gage pressure), and more preferably not less than 0.03 MPa (gage pressure) and not more than 0.15 MPa (gage pressure), in consideration of the expansion ratio of the second-step expanded particles.

The polypropylene-based resin expanded particles in accordance with an embodiment of the present invention, which have been obtained through the "first-step expansion process" or the "second-step expansion process", have a closed cell ratio of preferably not less than 88% and more preferably not less than 93%. If the closed cell ratio of the polypropylene-based resin expanded particles is less than 88%, internal gas in the polypropylene-based resin expanded particles easily flows out of the polypropylene-based resin expanded particles during in-mold foam molding. In this case, deformation after the in-mold foam molding is likely to be large.

The closed cell ratio here is a value which is obtained by (I) measuring a closed cell volume of the polypropylene-based resin expanded particles with the use of an air comparison pycnometer, and (II) dividing the closed cell volume by an apparent volume which has been separately measured by an ethanol immersion method.

The polypropylene-based resin expanded particles in accordance with an embodiment of the present invention preferably have at least two melting peaks of a DSC curve, which is obtained when 5 mg to 6 mg of the polypropylene-based resin expanded particles are heated from 40°C to 220°C at a heating rate of 10°C/min in a measurement by a differential scanning calorimetry method.

The polypropylene-based resin expanded particles in accordance with an embodiment of the present invention has a DSC ratio of preferably not less than 10% and not more than 50% and more preferably not less than 15% and not more than 30%. If the DSC ratio is in the above ranges, a polypropylene-based resin in-mold foamed molded product having a beautiful surface can be easily obtained.

The DSC ratio is a ratio which is calculated from a melting peak heat quantity Ql on a lower temperature side and a melting peak heat quantity Qh on a higher temperature side. The melting heat quantity Ql on the lower temperature side is a heat quantity represented by an area enclosed by (A) a melting peak curve of the DSC curve on the lower temperature side and (B) a tangent to the DSC curve that extends, to a point on a baseline curve at which point melting starts, from a maximum point of the DSC curve between a melting peak on the lower temperature side and a melting peak on the higher temperature side. The melting peak heat quantity Qh on the higher temperature side is represented by an area enclosed by (A) the melting peak curve of the DSC curve on the higher temperature side and (B) a tangent to the DSC curve that extends, to a point on the baseline curve at which point the melting ends, from the maximum point of the DSC curve between the melting peak on the lower temperature side and the melting peak on the higher temperature side. The DSC ratio is a higher-temperature-side melting peak ratio $[Qh/(Ql + Qh) \times 100]$.

Since the DSC ratio varies depending on temperature and pressure during expansion in producing the polypropylene-based resin expanded particles, it is possible to obtain expanded particles having a target DSC ratio by appropriately adjusting the expansion temperature and the expansion pressure. Generally, as the expansion temperature and the expansion pressure increase, the DSC ratio tends to decrease. The DSC ratio also changes depending on a type of polypropylene-based resin, and types of an additive and an expanding agent. Specifically, in a case where the expansion temperature is increased by 1°C, the DSC ratio decreases by approximately 5% to 20%. Meanwhile, in a case where the expansion pressure is increased by 0.1 MPa, the DSC ratio decreases by approximately 0.5% to 5%. The expansion ratio of the polypropylene-based resin expanded particles in accordance with an embodiment of the present invention, which has been obtained by the above-described production method, is not particularly limited and can be adjusted according to need. From the viewpoint of mechanical strength, the expansion ratio is preferably not less than 3 times and not more than 40 times, and more preferably not less than 3 times and not more than 25 times. The expansion ratio of the polypropylene-based resin expanded particles refers to a ratio ($\rho r/\rho b$), where $\rho r$ represents a density of the polypropylene-based resin particles prior to expansion and $\rho b$ represents an absolute specific gravity of the polypropylene-based resin expanded particles. The expansion ratio is calculated by (I) first measuring the weight w(g) of the polypropylene-based resin expanded particles, (II) then submerging, into ethanol in a graduated cylinder, the polypropylene-based resin expanded particles whose weight w(g) has been measured, (III) measuring a volume v ($cm^3$) of the polypropylene-based resin expanded particles by measuring an elevation of liquid level (submersion method), (IV) calculating the absolute specific gravity $\rho b$ = w/v of the polypropylene-based resin expanded particles, and (V) further calculating the expansion ratio as the ratio ($\rho r/\rho b$) of the density $\rho r$ of the polypropylene-based resin particles to the absolute specific gravity $\rho b$ of the polypropylene-based resin expanded particles.

The polypropylene-based resin expanded particles in accordance with an embodiment of the present invention has an average cell diameter of preferably not less than 100 $\mu$m and not more than 500 $\mu$m and more preferably not less than 120 $\mu$m and not more than 400 um. If the average cell diameter of the polypropylene-based resin expanded particles is in the above ranges, a resultant in-mold foamed molded product is likely to have a favorable appearance.

The average cell diameter here is a value which is measured as below.
First, a polypropylene-based resin expanded particle is cut at the center thereof with the use of a two-edged blade razer [manufactured by FEATHER Safety Razor Co., Ltd., two-edged blade of high stainless steel]. Then, a cut surface of the expanded particle is observed with the use of an optical microscope [manufactured by Keyence Corporation, VHX-100] at a magnification of 50 times, and an image of the cut surface is obtained. In the image thus obtained, a straight line is drawn so as to pass through substantially the center of the expanded particle. Then, the number n of cells through which the straight line passes is counted, and an expanded particle diameter L ($\mu$m) is read, which expanded particle diameter L ($\mu$m) is defined by points at which the straight line and a surface of the expanded particle intersect with each other. Thereafter, the average cell diameter is calculated by the following equation.

$$\text{Average cell diameter } (\mu m) = L/n$$

The polypropylene-based resin expanded particles in accordance with an embodiment of the present invention are measured and evaluated as follows, with regard to color. First, an expanded particle (sample) is sandwiched between two steel plates, and compressed by a yankee vice until the shape of the expanded particle becomes a sheet shape. While the expanded particle is kept in that compressed state, the expanded particle is heated (at 60°C) for 30 minutes by a dryer and the expanded particle having the sheet shape is obtained. The sample having the sheet shape thus obtained is mounted on a scanner table of a multifunctional printer (iR-ADV C5035, manufactured by Cannon Inc.) and scanned, so that an image of a surface of the sample having the sheet shape is obtained. The image is subjected to RGB analysis with the use of image processing software (DIBAS32), and mode values (measured values) of RGB values of the surface of the sample are measured. This measurement of the mode values (measured values) of RGB values is carried out for 20 expanded particles, and mode values (average values) of RGB values are obtained from mode values (measured values) of RGB values of the 20 samples each having the sheet shape. Note that the mode values (average values) of RGB values are expressed as (($R1 + R2 +...+ R20$)/20, ($G1 + G2+...+ G20$)/20, ($B1 + B2 +...+ B20$)/20), when the mode values (measured values) of RGB values of sample 1 = ($R1, G1, B1$), the mode values (measured values) of RGB values of sample 2 = ($R2, G2, B2$)..., and the mode values (measured values) of RGB values of sample 20 = ($R20, G20, B20$).

The RGB values are one color representation method, and capable of reproducing a wide range of colors by mixing three primary colors of Red, Green, and Blue. Each numerical value of R, G, and B is expressed in 256 levels from 0 to 255. For example, generally, RGB (0, 0, 0) = black and RGB (255, 255, 255) = white. In an embodiment of the present invention, a color represented by RGB values which satisfy the following Condition 1 is evaluated as gray, a color represented by RGB values which satisfy the following Condition 2 is evaluated as black, and a color represented by RGB values which satisfy neither Condition 1 nor Condition 2 is evaluated as other color.

Gray: RGB values which satisfy Condition 1.
Black: RGB values which satisfy Condition 2.
Other color: RGB values which satisfy neither Condition 1 nor Condition 2.

Condition 1: Mode values (average values) of RGB values satisfy the following (a), (b), and (c):

(a) RGB (Max) $\leq$ 230, where RGB (Max) represents a highest value among values of R, G and B;
(b) RGB (Min) $\geq$ 70, where RGB (Min) represents a lowest value among the values of R, G and B; and
(c) RGB (Max) - RGB (Min) $\leq$ 20.

Condition 2: Mode values (average values) of RGB values satisfy the following (d), (e), and (f):

(d) RGB (Max) $\leq$ 40, where RGB (Max) represents a highest value among values of R, G and B;
(e) RGB (Min) $\geq$ 0, where RGB (Min) represents a lowest value among the values of R, G and B; and
(f)

$$\mathrm{RGB~(Max)~-~RGB~(Min)} \leq 10.$$

With regard to the above RGB (Max) and the RGB (Min), for example, in a case where mode values (average values) of RGB values of a sample are R = 120, G=110, and B=100, RGB (Max) = 120 and RGB (Min) = 100.

Further, color unevenness of the polypropylene-based resin expanded particles in an embodiment of the present invention is evaluated as follows by using the mode values (measured values) of RGB values. Among the mode values (measured values) of RGB values of the 20 expanded particles subjected to measurement, the highest value of RGB (Max) is referred to as RGB (Max)i and the lowest value of RGB (Min) is referred to as RGB (Min)i. Then, the color unevenness is evaluated on the basis of a difference (RGB (Max)i - RGB (Min)i) between RGB (Max)i and RGB (Min)i. The difference between RGB (Max)i and RGB (Min)i is preferably not more than 50 and more preferably not more than 30. In a case where the above condition regarding difference (RGB (Max)i - RGB (Min)i) is satisfied, it is possible to obtain polypropylene-based resin expanded particles whose color is less uneven.

Note that in a case where a surface of an in-mold foamed molded product (described later) is smooth, an evaluation result which is obtained by the RGB analysis of a result of scanning of the sheets obtained from the expanded particles is equivalent to an evaluation result which is obtained by the RGB analysis of a result of scanning of that smooth surface of the in-mold foamed molded product.

The method for producing an in-mold foamed molded product from expanded particles in accordance with an embodiment of the present invention is, for example, a method of obtaining an in-mold foamed molded product by (I) filling, with the polypropylene-based resin expanded particles, a mold which can be closed but cannot be sealed, (II) heating the polypropylene-based resin expanded particles with steam or the like, (III) molding the polypropylene-based resin expanded particles by heating and fusing the polypropylene-based resin expanded particles together so that the in-mold foamed molded product will have the shape of the mold, and (IV) taking out the in-mold foamed molded product after the mold is cooled with a cooling medium such as water.

It is preferable to apply a pressure equal to or higher than atmospheric pressure inside the polypropylene-based resin expanded particles before in-mold foam molding. In a case where in-mold foam molding is carried out by using expanded particles inside which the pressure equal to or higher than the atmospheric pressure is applied, a resultant polypropylene-based resin in-mold foamed molded product is likely to have a favorable surface appearance and to deform less. A method for applying the pressure equal to or higher than atmospheric pressure inside the expanded particles is not particularly limited. The pressure can be applied inside the expanded particles by a conventionally known method such as an internal pressure application method or a compression filling method.

In the internal pressure application method, an internal pressure equal to or higher than atmospheric pressure is preliminarily applied inside polypropylene-based resin expanded particles by keeping the polypropylene-based resin expanded particles under a pressure which is created by inorganic gas. Then, the polypropylene-based resin expanded particles to which the internal pressure is applied are used to fill a molding space of, for example, a mold which can be closed but cannot be sealed.

The internal pressure is preferably not less than 0.12 MPa (absolute pressure) and not more than 0.40 MPa (absolute pressure), and more preferably not more than 0.14 MPa (absolute pressure) and not more than 0.30 MPa (absolute pressure). If the internal pressure of the polypropylene-based resin expanded particles is in the above ranges, a resultant in-mold foamed molded product is likely to have a beautiful appearance. The inorganic gas which is used for the above internal pressure application can be, for example, air, nitrogen, helium, neon, argon, and/or carbon dioxide. These inorganic gases can be used individually or two or more of these inorganic gases can be used in combination. Among others, air and nitrogen are preferable because air and nitrogen have great versatility.

In the compression filling method, the polypropylene-based resin expanded particles are compressed in a compression tank with the use of pressurized gas so that a bulk density of the expanded particles will be increased by preferably 1.25 times to 3.0 times and more preferably 1.5 times to 2.2 times with respect to a bulk density of the expanded particles before filling the mold. Then, the polypropylene-based resin expanded particles thus compressed are used to fill a molding space of, for example, a mold which can be closed but cannot be sealed. In a case where a compression rate of the polypropylene-based resin expanded particles is in the above ranges, a resultant in-mold foamed molded product is likely to have a beautiful appearance.

The pressurized gas which is used for the above compression can be, for example, air, nitrogen, helium, neon, argon, and/or carbon dioxide. These pressurized gases can be used individually or two or more of these pressurized gases can be used in combination. Among others, air and nitrogen are preferable because air and nitrogen have great versatility.

With the above method, the polypropylene-based resin expanded particles are put in the mold or the like so as to fill the mold or the like. Then, the polypropylene-based resin expanded particles are subjected to molding with the use of a heating medium such as steam at a heating steam pressure of 0.15 MPa (gage pressure) to 0.40 MPa (gage pressure) for a heating time of approximately 3 seconds to 50 seconds, so that the polypropylene-based resin expanded particles are fused together. Thereafter, after the mold is cooled with a cooling medium such as water, the mold is opened and a polypropylene-based resin in-mold foamed molded product is obtained. The heating time which is suitable largely varies depending on the shape of the mold. As the heating time increases, the expanded particles more easily expand, and as a result, inter-particle dimples on a surface of the in-mold foamed molded product are likely to decrease. The expanded particles obtained by the production method in accordance with an embodiment of the present invention leads to saving of energy of the steam, since it is possible to obtain, even in a short heating time, an in-mold foamed molded product which has decreased inter-particle dimples on the surface of the in-mold foamed molded product and which has excellent blackness. Note that in a case where steam is used for heating, it is preferable to take approximately 5 seconds to 30 seconds for increasing the heating steam pressure up to a target heating steam pressure.

Note that an embodiment of the present invention can be arranged as follows.

[1] A method for producing polypropylene-based resin expanded particles, including the steps of:

(i) obtaining a dispersion slurry by dispersing polypropylene-based resin particles and carbon dioxide into an aqueous dispersion medium in a closed vessel, the polypropylene-based resin particles containing not less than 1.0 part by weight and not more than 25 parts by weight of carbon black, and not less than 0.05 parts by weight and not more than 1.0 part by weight of one or both of magnesium hydroxide and magnesium carbonate with respect to 100 parts by weight of a polypropylene-based resin;
(ii) heating and pressurizing the dispersion slurry; and
(iii) releasing the polypropylene-based resin particles contained in the dispersion slurry, into a region at a pressure lower than an internal pressure of the closed vessel.

[2] The method as described in [1], wherein:
the aqueous dispersion medium is water.
[3] The method as described in [1] or [2], wherein:
the dispersion slurry is heated to a temperature not less than a softening temperature of the polypropylene-based resin particles.
[4] Polypropylene-based resin expanded particles, including:
not less than 1.0 part by weight and not more than 25 parts by weight of carbon black, and not less than 0.05 parts by weight and not more than 1.0 part by weight of one or both of magnesium hydroxide and magnesium carbonate with respect to 100 parts by weight of a polypropylene-based resin, the polypropylene-based resin expanded particles having a surface color satisfying the following (a), (b), and (c):

(a) RGB (Max) $\leq$ 230, where RGB (Max) represents a highest value among values of R, G and B;
(b) RGB (Min) $\geq$ 70, where RGB (Min) represents a lowest value among the values of R, G and B; and
(c)

$$\mathrm{RGB\ (Max) - RGB\ (Min) \leq 20.}$$

[5] The polypropylene-based resin expanded particles as described in [4], having a surface color which satisfies the following ($\alpha$):

($\alpha$)

$$RGB\ (Max)i\ -\ RGB\ (Min)i\ \leq\ 50.$$

[6] The polypropylene-based resin expanded particles as described in [4] or [5], having an average cell diameter of not less than 100 $\mu$m and not more than 500 $\mu$m.

[7] A foamed molded product made from polypropylene-based resin expanded particles as described in any one of [4] to [6].

Further, an embodiment of the present invention can be also arranged as below.

A method for producing polypropylene-based resin expanded particles, including the steps of:

(i) dispersing polypropylene-based resin particles and carbon dioxide into an aqueous dispersion medium in a closed vessel, the polypropylene-based resin particles containing not less than 1.0 part by weight and not more than 25 parts by weight of carbon black, and not less than 0.05 parts by weight and not more than 1.0 part by weight of one or both of magnesium hydroxide and magnesium carbonate with respect to 100 parts by weight of a polypropylene-based resin;

(ii) heating a dispersion slurry obtained in (i) to a temperature not less than a softening temperature of the polypropylene-based resin particles and pressurizing the dispersion slurry; and

(iii) then releasing the polypropylene-based resin particles into a region at a pressure lower than an internal pressure of the closed vessel.

[2] Polypropylene-based resin expanded particles, including: not less than 1.0 part by weight and not more than 25 parts by weight of carbon black, and not less than 0.05 parts by weight and not more than 1.0 part by weight of one or both of magnesium hydroxide and magnesium carbonate with respect to 100 parts by weight of a polypropylene-based resin, the polypropylene-based resin expanded particles exhibiting a color satisfying the following (a), (b), and (c):

(a) RGB (Max) $\leq$ 230, where RGB (Max) represents a highest value among values of R, G and B;

(b) RGB (Min) $\geq$ 70, where RGB (Min) represents a lowest value among the values of R, G and B; and

(c)

$$RGB\ (Max)\ -\ RGB\ (Min)\ \leq\ 20.$$

[3] A molded product made from expanded particles, the expanded particles being polypropylene-based resin expanded particles as described in [2].

Examples

Next, the following will discuss details of polypropylene-based resin expanded particles in accordance with an embodiment of the present invention and a production method thereof, with reference to Examples and Comparative Examples. However, an embodiment of the present invention is not limited to such Examples and Comparative Examples. The following substances, which had not been specially purified or the like, were used in Examples and Comparative Examples.

● Polypropylene-based resin (commercially available product)

- Polypropylene-based resin: ethylene-propylene random copolymer [MFR = 7.5 g/10 minutes, melting point: 146.1°C]

● Carbon black

- Carbon black: [primary particle diameter of 35 nm]

A particle diameter of carbon black was measured as follows. First, a cross-section of a cell film of a polypropylene-based resin expanded particle obtained was magnified 40,000 times with the use of a transmission electron microscope and a picture of the cross-section thus magnified was taken. Then, in the picture thus obtained with the use of the transmission electron microscope, particle diameters (Feret diameters) of arbitrary selected 50 carbon black primary particles were measured in X and Y directions. Subsequently, an average value of the particle diameters was calculated, and the average value thus calculated was defined as the particle diameter of carbon black. The carbon black was used in the form of a carbon black masterbatch which contains 40% by weight of the carbon black in a polypropylene-based resin (MFR = 7.5 g/10 minutes).

● Other additives

- Polyethylene glycol [manufactured by Lion Corporation, average molecular weight of 300]
- Talc [manufactured by Hayashi-Kasei Co., Ltd., Talcan Powder PK-S]
- Magnesium hydroxide [Sakai Chemical Industry Co., Ltd., MGZ-3]
- Magnesium carbonate [Konoshima Chemical Co., Ltd.,

GOLD STAR]

The following will describe an evaluation method which is carried out in Examples and Comparative Examples.

(Expansion ratio)

The expansion ratio refers to a ratio ($\rho r/\rho b$), where $\rho r$ represents a density of the polypropylene-based resin particles prior to expansion and $\rho b$ represents an absolute specific gravity of the polypropylene-based resin expanded particles. The expansion ratio is calculated by (I) first measuring the weight w(g) of the polypropylene-based resin expanded particles, (II) then submerging, into ethanol in a graduated cylinder, the polypropylene-based resin expanded particles whose weight w(g) has been measured, (III) measuring a volume v (cm$^3$) of the polypropylene-based resin expanded particles by measuring an elevation of liquid level (submersion method), (IV) calculating the absolute specific gravity $\rho b$ = w/v of the polypropylene-based resin expanded particles, and (V) further calculating the expansion ratio as the ratio ($\rho r/\rho b$) of the density $\rho r$ of the polypropylene-based resin particles to the absolute specific gravity of the polypropylene-based resin expanded particles.

[Color evaluation of expanded particles]

First, an expanded particle was sandwiched between two steel plates, and compressed by a yankee vice until the shape of the expanded particle became a sheet shape. While the expanded particle was kept in that compressed state, the expanded particle was heated (at 60°C) for 30 minutes by a dryer and the expanded particle having the sheet shape was obtained. The sample having the sheet shape thus obtained was mounted on a scanner table of a multifunctional printer (iR-ADV C5035, manufactured by Cannon Inc.) and scanned. Then, a 2 mm × 2 mm area from the center of the sample having the sheet shape in an image obtained by the above scanning was subjected to RGB analysis with the use of image processing software (DIBAS32), and mode values (measured values) of RGB values of the sample having the sheet shape were measured. This measurement of the mode values of RGB values was carried out for 20 expanded particles, and mode values (average values) of RGB values were obtained. With regard to the mode values (average values) of RGB values thus obtained, a color represented by RGB values which satisfy the following Condition 1 was evaluated as gray, a color represented by RGB values which satisfy the following Condition 2 was evaluated as black, and a color represented by RGB values which satisfy neither Condition 1 nor Condition 2 was evaluated as other color. With regard to RGB (Max) and RGB (Min) below, for example, in a case where measured RGB values of a sample were R = 120, G = 110, and B = 100, RGB (Max) = 120 and RGB (Min) = 100.
Gray (GY): RGB values which satisfy Condition 1.
Black (BLK): RGB values which satisfy Condition 2.
Other color (Other): RGB values which satisfy neither Condition 1 nor Condition 2.

Condition 1: Mode values (average values) of RGB values satisfy the following (a), (b), and (c):

(a) RGB (Max) ≤ 230, where RGB (Max) represents a highest value among values of R, G and B;
(b) RGB (Min) ≥ 70, where RGB (Min) represents a lowest value among the values of R, G and B; and

(c)

$$RGB\ (Max)\ -\ RGB\ (Min)\ \leq\ 20.$$

Condition 2: Mode values (average values) of RGB values satisfy the following (d), (e), and (f):

(d) RGB (Max) $\leq$ 40, where RGB (Max) represents a highest value among values of R, G and B;
(e) RGB (Min) $\geq$ 0, where RGB (Min) represents a lowest value among the values of R, G and B; and
(f)

$$RGB\ (Max)\ -\ RGB(Min)\ \leq\ 10.$$

<Color unevenness evaluation of expanded particles>

Visual evaluation was carried out with respect to 20 samples each having the sheet shape in the images which had been obtained by scanning in the above color evaluation of the expanded particles.

Good: Color unevenness is hardly found on respective surfaces of the expanded particles.
Poor: Color unevenness is often found on the respective surfaces of the expanded particles.

At the same time that the visual evaluation was carried out, color unevenness of the expanded particles was quantified with the use of the above RGB values. Among the mode values (measured values) of RGB values of the 20 expanded particles subjected to measurement, the highest value of RGB (Max) was referred to as RGB (Max)i and the lowest value of RGB (Min) was referred to as RGB (Min)i. Then, in a case where a difference between the RGB (Max)i and the RGB (Min)i was not more than 50, the color unevenness was evaluated as being hardly found on the respective surfaces of the expanded particles.

<Measurement of average cell diameter of expanded particles>

First, a polypropylene-based resin expanded particle was cut at the center thereof with the use of a two-edged blade razer [manufactured by FEATHER Safety Razor Co., Ltd., two-edged blade of high stainless steel]. Then, a cut surface of the expanded particle was observed with the use of an optical microscope [manufactured by Keyence Corporation, VHX-100] at a magnification of 50 times, and an image of the cut surface was obtained. In the image thus obtained, a straight line was drawn so as to pass through substantially the center of the expanded particle. Then, the number n of cells through which the straight line passes was counted, and an expanded particle diameter L ($\mu$m) was read, which expanded particle diameter L (pm) was defined by points at which the straight line and a surface of the expanded particle intersected with each other. Thereafter, the average cell diameter was calculated by the following equation.

$$Average\ cell\ diameter\ (\mu m)\ =\ L/n$$

The above calculation of the average cell diameter was carried out for 10 polypropylene-based resin expanded particles, and an average value of the average cell diameters thus calculated was obtained.

<Surface appearance of in-mold foamed molded product>

A resultant in-mold foamed molded product was visually observed, and was evaluated on the basis of the following criteria.

Good: The in-mold foamed molded product has a smooth surface where no wrinkle is found.
Poor: The in-mold foamed molded product has an uneven wrinkled surface.

<Evaluation of color of in-mold foamed molded product>

A portion having a thickness of 10 mm was cut from an in-mold foamed molded product which had been

prepared in accordance with each of Examples. A light source (product name: iPhone 6 (iPhone is a registered trademark), manufactured by Apple Inc.) was placed at a height of 50 cm from the in-mold foamed molded product and at an angle of 45° with respect to a surface of the in-mold foamed molded product which surface was to be photographed. Then, the surface of the in-mold foamed molded product was photographed by a camera (Product name: EX-Z90, manufactured by CASIO COMPUTER CO., LTD.) at a position at a height of 50 cm from the surface of the in-mold foamed molded product in a direction perpendicular to the surface of the in-mold foamed molded product.

(Example 1)

[Preparation of polypropylene-based resin particles]

With respect to 100 parts by weight of a polypropylene-based resin, 4 parts by weight of carbon black, 0.5 parts by weight of polyethylene glycol, 0.05 parts by weight of talc, and 0.10 parts by weight of magnesium hydroxide were weighed and dry blended. A mixture obtained by this dry-blending was melted and kneaded at a resin temperature of 220°C and extruded in a strand shape with the use of a twin-screw extruder (TEM26-XS, manufactured by Toshiba Machine Co., Ltd.). After a strand obtained by this extrusion was cooled in a water bath whose length was 2 m, the strand was cut. As a result, polypropylene-based resin particles (1.2 mg/particle) were produced.

[Preparation of polypropylene-based resin expanded particles]

First, into a pressure-resistant autoclave having a capacity of 10 L, 100 parts by weight of the polypropylene-based resin particles (2.4 kg) which had been obtained as described above, 200 parts by weight of water, 0.5 parts by weight of tertiary calcium phosphate [manufactured by TAIHEI CHEMICAL INDUSTRIAL CO., LTD.] serving as a poorly water-soluble inorganic compound, and 0.03 parts by weight of sodium alkyl sulfonate (n-paraffin sodium sulfonate) [manufactured by Kao Corporation, LATEMUL PS] serving as a surfactant were introduced. While a resultant mixture was being stirred, 5 parts by weight of carbon dioxide serving as an expanding agent was added to the mixture. The mixture in the autoclave was heated to an expansion temperature of 149.0°C. Thereafter, additional carbon dioxide serving as an expanding agent was injected into the autoclave so as to increase an internal pressure of the autoclave to an expansion pressure of 3.3 MPa. Then, the expansion temperature and the expansion pressure were maintained for 30 minutes. Subsequently, the mixture in the autoclave was released into atmospheric air at a temperature of 95°C through an orifice having a diameter of 3.6 mm by opening a valve provided at a lower part of the autoclave. In this way, polypropylene-based resin expanded particles at an expansion ratio of approximately 20 times were obtained. In obtaining the polypropylene-based resin expanded particles, the internal pressure of the autoclave was kept with the use of carbon dioxide so as not to decrease during release of the mixture. The polypropylene-based resin expanded particles thus obtained were evaluated with regard to color and color unevenness, and the average cell diameter of the polypropylene-based resin expanded particles was measured. Table 1 shows results of the above evaluation and measurement.

[Preparation of polypropylene-based resin in-mold foamed molded product]

After the expanded particles thus obtained were washed with hydrochloric acid aqueous solution having pH of 1 for 30 seconds and then washed with water for 30 seconds, the expanded particles were dried at 75°C. The expanded particles thus washed were introduced into a pressure-resistant container, and were impregnated with pressurized air. As a result, the expanded particles were adjusted in advance so as to have an internal pressure of 0.20 MPa (absolute pressure). Then, these expanded polypropylene-based resin particles were put in a mold having a size of length 300 mm × width 400 mm × thickness 50 mm so as to fill the mold. Then, a mold chamber was heated for 10 seconds with steam and the expanded particles were fused together. After the inside of the mold and the surface of a resultant molded product were cooled with water, the molded product was taken out and thus a polypropylene-based resin in-mold foamed molded product was obtained. The in-mold foamed molded product thus obtained was left to stand still at 23°C for 2 hours, and then cured at 75°C for 16 hours. Thereafter, after the in-mold foamed molded product was left to stand still for 4 hours in a room at 23°C, a surface appearance of the in-mold foamed molded product was evaluated. Table 1 shows a result of this evaluation.

(Examples 2 to 9 and Comparative Examples 1 to 13)

The same operations as described in Example 1 were carried out, except that (A) a kind(s) of an additive(s) and a resin formulation were changed as shown in Tables 1 and 2 in [Preparation of polypropylene-based resin particles] and (B) an expansion formulation was changed as shown in Tables 1 and 2 in [Preparation of polypropylene-based resin expanded particles]. In this way, polypropylene-based resin particles, polypropylene-based resin expanded particles, and polypropylene-based resin in-mold foamed molded products were obtained. Tables 1 and 2 show results of evaluation of the polypropylene-based resin expanded particles and the polypropylene-based resin in-mold foamed molded products which were obtained as above. Further, (1) of Fig. 1 is a picture showing the color of the surface of the in-mold foamed molded product which was obtained in Comparative Example 2 of the present application, (2) of Fig. 1 is a picture showing the color of the surface of the in-mold foamed molded product which was obtained in Comparative Example 1 of the present application, and (3) of Fig. 1 is a picture showing the color of the surface of the in-mold foamed molded product which was obtained in Example 1 of the present application.

[Table 1]

| | | | Examples | | | | |
|---|---|---|---|---|---|---|---|
| | | | 1 | 2 | 3 | 4 | 5 |
| Resin formulation | Resin | wt. parts | 100 | 100 | 100 | 100 | 100 |
| | Carbon black (primary particle diameter: 35 nm) | wt. parts | 4.0 | 4.0 | 4.0 | 4.0 | 4.0 |
| | Talc | wt. parts | 0.05 | 0.05 | 0.05 | 0.05 | 0.05 |
| | Magnesium hydroxide | wt. parts | 0.10 | 0.25 | 0.50 | - | - |
| | Magnesium carbonate | wt. parts | - | - | - | 0.10 | 0.25 |
| Expansion formulation | Expansion temperature | °C | 149.0 | 149.0 | 149.0 | 149.0 | 149.0 |
| | Carbon dioxide gas | MPa | 3.3 | 3.3 | 3.3 | 3.3 | 3.3 |
| | Nitrogen gas | MPa | - | - | - | - | - |
| | Air | MPa | - | - | - | - | - |
| Expanded particles | Expansion ratio | times | 20.1 | 20.3 | 20.5 | 20.2 | 20.3 |
| | DSC ratio | % | 21.4 | 21.3 | 21.1 | 21.4 | 21.3 |
| | Closed cell ratio | % | 95.3 | 95.0 | 94.8 | 96.7 | 96.5 |
| | RGB (Max) | - | 102 | 115 | 116 | 99 | 115 |
| | RGB (Min) | - | 95 | 108 | 110 | 92 | 108 |
| | RGB (Max) - RGB (Min) | - | 7 | 7 | 6 | 7 | 7 |
| | RGB (Max)i | - | 108 | 123 | 123 | 105 | 121 |
| | RGB (Min)i | - | 90 | 104 | 105 | 86 | 103 |
| | RGB (Max)i - RGB (Min)i | - | 18 | 19 | 18 | 19 | 18 |
| | Color | - | GY | GY | GY | GY | GY |
| | Color unevenness | - | Good | Good | Good | Good | Good |
| | Average cell diameter | μm | 253 | 238 | 238 | 274 | 253 |
| Molded product | Surface appearance | - | Good | Good | Good | Good | Good |

## [Table 1] (Cont.)

| | | | Examples | | | |
|---|---|---|---|---|---|---|
| | | | 6 | 7 | 8 | 9 |
| Resin formulation | Resin | wt. parts | 100 | 100 | 100 | 100 |
| | Carbon black (primary particle diameter: 35 nm) | wt. parts | 4.0 | 4.0 | 10.0 | 10.0 |
| | Talc | wt. parts | 0.05 | 0.05 | 0.05 | 0.05 |
| | Magnesium hydroxide | wt. parts | - | 0.25 | 0.25 | - |
| | Magnesium carbonate | wt. parts | 0.50 | 0.25 | - | 0.25 |
| Expansion formulation | Expansion temperature | °C | 149.0 | 149.0 | 149.0 | 149.0 |
| | Carbon dioxide gas | MPa | 3.3 | 3.3 | 3.3 | 3.3 |
| | Nitrogen gas | MPa | - | - | - | - |
| | Air | MPa | - | - | - | - |
| Expanded particles | Expansion ratio | times | 20.4 | 20.5 | 20.8 | 20.8 |
| | DSC ratio | % | 21.3 | 21.0 | 21.0 | 21.1 |
| | Closed cell ratio | % | 96.2 | 95.8 | 95.4 | 96.2 |
| | RGB (Max) | - | 116 | 112 | 89 | 90 |
| | RGB (Min) | - | 106 | 102 | 80 | 82 |
| | RGB (Max) - RGB (Min) | - | 10 | 10 | 9 | 8 |
| | RGB (Max)i | - | 121 | 116 | 94 | 95 |
| | RGB (Min)i | - | 102 | 99 | 75 | 77 |
| | RGB (Max)i - RGB (Min)i | - | 19 | 17 | 19 | 18 |
| | Color | - | GY | GY | GY | GY |
| | Color unevenness | - | Good | Good | Good | Good |
| | Average cell diameter | µm | 233 | 236 | 221 | 218 |
| Molded product | Surface appearance | - | Good | Good | Good | Good |

[Table 2]

| | | | Comparative Examples | | | | |
|---|---|---|---|---|---|---|---|
| | | | 1 | 2 | 3 | 4 | 5 |
| Resin formulation | Resin | wt. parts | 100 | 100 | 100 | 100 | 100 |
| | Carbon black (primary particle diameter: 35 nm) | wt. parts | 4.0 | 0.5 | 4.0 | 4.0 | 4.0 |
| | Talc | wt. parts | 0.05 | 0.05 | 0.25 | 0.05 | 0.05 |
| | Magnesium hydroxide | wt. parts | - | - | - | 0.10 | 5.00 |
| | Magnesium carbonate | wt. parts | - | - | - | - | - |
| Expansion temperature | Expansion temperature | °C | 149.0 | 149.0 | 149.0 | 151.0 | 149.0 |
| Expanding agent | Carbon dioxide gas | MPa | 3.3 | 3.3 | 3.3 | - | 3.2 |
| | Nitrogen gas | MPa | - | - | - | 3.8 | - |
| | Air | MPa | - | - | - | - | - |
| Expanded particles | Expansion ratio | times | 20.2 | 19.9 | 20.3 | 19.8 | 20.6 |
| | DSC ratio | % | 21.4 | 21.5 | 21.3 | 21.5 | 21.3 |
| | Closed cell ratio | % | 97.5 | 97.6 | 96.8 | 97.6 | 92.2 |
| | RGB (Max) | - | 30 | 161 | 36 | 35 | 124 |
| | RGB (Min) | - | 24 | 152 | 27 | 28 | 113 |
| | RGB (Max) - RGB (Min) | - | 6 | 9 | 9 | 7 | 11 |
| | RGB (Max)i | - | 34 | 223 | 76 | 38 | 129 |
| | RGB (Min)i | - | 20 | 114 | 23 | 23 | 103 |
| | RGB (Max)i - RGB (Min)i | - | 14 | 109 | 53 | 15 | 26 |
| | Color | - | BLK | GY | BLK | BLK | GY |
| | Color unevenness | - | Good | Poor | Poor | Good | Good |
| | Average cell diameter | µm | 259 | 278 | 212 | 237 | 82 |
| Molded product | Surface appearance | - | Good | Good | Good | Good | Poor |

20

## [Table. 2] (Cont.)

| | | | Comparative Examples | | | | |
|---|---|---|---|---|---|---|---|
| | | | 6 | 7 | 8 | 9 | 10 |
| Resin formulation | Resin | wt. parts | 100 | 100 | 100 | 100 | 100 |
| | Carbon black (primary particle diameter: 35 nm) | wt. parts | 4.0 | 4.0 | 4.0 | 4.0 | 4.0 |
| | Talc | wt. parts | 0.05 | 0.05 | 0.05 | 0.50 | 0.05 |
| | Magnesium hydroxide | wt. parts | - | 0.10 | 0.50 | - | - |
| | Magnesium carbonate | wt. parts | 5.00 | - | - | - | 0.50 |
| Expansion temperature | Expansion temperature | °C | 149.0 | 151.0 | 151.0 | 149.0 | 151.0 |
| Expanding agent | Carbon dioxide gas | MPa | 3.2 | - | - | 3.2 | - |
| | Nitrogen gas | MPa | - | - | 3.8 | - | 3.8 |
| | Air | MPa | - | 3.8 | - | - | - |
| Expanded particles | Expansion ratio | times | 20.5 | 19.5 | 19.8 | 20.2 | 19.2 |
| | DSC ratio | % | 21.3 | 21.5 | 21.6 | 21.2 | 21.8 |
| | Closed cell ratio | % | 93.2 | 97.3 | 96.8 | 96.7 | 97.1 |
| | RGB (Max) | - | 122 | 32 | 34 | 38 | 34 |
| | RGB (Min) | - | 110 | 23 | 24 | 27 | 27 |
| | RGB (Max) - RGB (Min) | - | 12 | 9 | 10 | 11 | 7 |
| | RGB (Max)i | - | 128 | 38 | 38 | 83 | 41 |
| | RGB (Min)i | - | 105 | 19 | 20 | 22 | 27 |
| | RGB (Max)i - RGB (Min)i | - | 23 | 19 | 18 | 61 | 14 |
| | Color | - | GY | BLK | BLK | BLK | BLK |
| | Color unevenness | - | Good | Good | Good | Poor | Good |
| | Average cell diameter | μm | 82 | 230 | 237 | 211 | 220 |
| Molded product | Surface appearance | - | Poor | Good | Good | Good | Good |

## [Table. 2] (Cont.)

| | | | Comparative Examples | | |
|---|---|---|---|---|---|
| | | | 11 | 12 | 13 |
| Resin formulation | Resin | wt. parts | 100 | 100 | 100 |
| | Carbon black (primary particle diameter: 35 nm) | wt. parts | 4.0 | 4.0 | 4.0 |
| | Talc | wt. parts | 0.05 | 0.05 | 0.05 |
| | Magnesium hydroxide | wt. parts | - | 0.01 | - |
| | Magnesium carbonate | wt. parts | 0.50 | - | 0.01 |
| Expansion temperature | Expansion temperature | °C | 151.0 | 149.0 | 149.0 |
| Expanding agent | Carbon dioxide gas | MPa | - | 3.3 | 3.3 |
| | Nitrogen gas | MPa | - | - | - |
| | Air | MPa | 3.8 | - | - |
| Expanded particles | Expansion ratio | times | 19.5 | 20.1 | 19.8 |
| | DSC ratio | % | 21.6 | 21.2 | 21.5 |
| | Closed cell ratio | % | 97.2 | 97.3 | 97.1 |
| | RGB (Max) | - | 34 | 98 | 96 |
| | RGB (Min) | - | 25 | 86 | 81 |
| | RGB (Max) - RGB (Min) | - | 9 | 12 | 15 |
| | RGB (Max)i | - | 38 | 102 | 97 |
| | RGB (Min)i | - | 21 | 43 | 40 |
| | RGB (Max)i - RGB (Min)i | - | 17 | 59 | 57 |
| | Color | - | BLK | GY | GY |
| | Color unevenness | - | Good | Poor | Poor |
| | Average cell diameter | μm | 225 | 232 | 232 |
| Molded product | Surface appearance | - | Good | Good | Good |

As is clear from each of Examples 1 to 9, the polypropylene-based resin expanded particles which are obtained by the production method of the present invention have a uniform gray color and the in-mold foamed molded product obtained by the production method of the present invention has an excellent surface appearance. It is clear that in a case where as in Comparative Example 1, neither magnesium hydroxide nor magnesium carbonate is added to resin, the expanded particles are black. Moreover, it is clear that in a case where as in Comparative Example 2, an amount of carbon black added is smaller than a range in accordance with an embodiment of the present invention, the expanded particles obtained are gray but uneven in color. Furthermore, it is clear that even in a case where as in Comparative Examples 3 and 9, an amount of talc added is increased, which talc is white and serves as a cell nucleating agent, it is not possible to obtain expanded particles which have a uniform gray color. It is also clear that in a case where as in Comparative Examples 4, 7, 8, 10, and 11, the expanding agent is not carbon dioxide, resultant expanded particles are black. It is also clear that in a case where as in Comparative Examples 5 and 6, an amount of at least one selected from magnesium hydroxide and magnesium carbonate added is larger than a range in accordance with an embodiment of the present invention, resultant expanded particles have an inferior surface appearance since an average cell diameter is microscopic and too small. In addition, it is clear that in a case where as in Comparative Examples 12 and 13, an amount of at least one selected from magnesium hydroxide and magnesium carbonate added is smaller than the range in accordance with an embodiment of the present invention, the expanded particles obtained are gray but uneven in color.

**Claims**

1. A method for producing polypropylene-based resin expanded particles, comprising the steps of:

   (i) obtaining a dispersion slurry by dispersing polypropylene-based resin particles and carbon dioxide into an aqueous dispersion medium in a closed vessel, the polypropylene-based resin particles containing not less than 1.0 part by weight and not more than 25 parts by weight of carbon black, and not less than 0.05 parts by weight and not more than 1.0 part by weight of one or both of magnesium hydroxide and magnesium carbonate with respect to 100 parts by weight of a polypropylene-based resin;
   (ii) heating and pressurizing the dispersion slurry; and
   (iii) releasing the polypropylene-based resin particles contained in the dispersion slurry, into a region at a pressure lower than an internal pressure of the closed vessel.

2. The method as set forth in claim 1, wherein:
   the aqueous dispersion medium is water.

3. The method as set forth in claim 1 or 2, wherein:
   the dispersion slurry is heated to a temperature not less than a softening temperature of the polypropylene-based resin particles.

4. Polypropylene-based resin expanded particles, comprising:
   not less than 1.0 part by weight and not more than 25 parts by weight of carbon black, and not less than 0.05 parts by weight and not more than 1.0 part by weight of one or both of magnesium hydroxide and magnesium carbonate with respect to 100 parts by weight of a polypropylene-based resin, the polypropylene-based resin expanded particles having a surface color satisfying the following (a), (b), and (c):

   (a) RGB (Max) $\leq$ 230, where RGB (Max) represents a highest value among values of R, G and B;
   (b) RGB (Min) $\geq$ 70, where RGB (Min) represents a lowest value among the values of R, G and B; and
   (c)

$$\text{RGB (Max) - RGB (Min)} \leq 20;$$

   wherein RGB (Max) and RGB (Min) are determined as set out in the specification.

5. The polypropylene-based resin expanded particles as set forth in claim 4, having a surface color which satisfies the following ($\alpha$):

$$(\alpha) \quad \text{RGB (Max)i - RGB (Min)i} \leq 50;$$

   wherein RGB (Max)i and RGB (Min)i are determined as set out in the specification.

6. The polypropylene-based resin expanded particles as set forth in claim 4 or 5, having an average cell diameter of not less than 100 $\mu$m and not more than 500 $\mu$m.

7. A foamed molded product made from polypropylene-based resin expanded particles as recited in any one of claims 4 to 6.

**Patentansprüche**

1. Ein Verfahren zur Herstellung von expandierten Harzteilchen auf Polypropylenbasis, umfassend die folgenden Schritte:

(i) Erhalten einer Dispersionsaufschlämmung durch Dispergieren von Harzteilchen auf Polypropylenbasis und Kohlendioxid in einem wässrigen Dispersionsmedium in einem geschlossenen Gefäß, wobei die Harzteilchen auf Polypropylenbasis nicht weniger als 1,0 Gew.-Teile und nicht mehr als 25 Gew.-Teile Ruß und nicht weniger als 0,05 Gew.-Teile und nicht mehr als 1,0 Gew.-Teile von einem oder beiden von Magnesiumhydroxid und Magnesiumcarbonat bezogen auf 100 Gew.-Teile eines Harzes auf Polypropylenbasis enthalten;
(ii) Erwärmen und Unterdrucksetzen der Dispersionsaufschlämmung; und
(iii) Freisetzen der in der Dispersionsaufschlämmung enthaltenen Harzteilchen auf Polypropylenbasis in einen Bereich mit einem Druck, der niedriger ist als der Innendruck des geschlossenen Behälters.

2. Das Verfahren nach Anspruch 1, wobei:
das wässrige Dispersionsmedium Wasser ist.

3. Das Verfahren nach Anspruch 1 oder 2, wobei:
die Dispersionsaufschlämmung auf eine Temperatur erwärmt wird, die nicht unter einer Erweichungstemperatur der Harzteilchen auf Polypropylenbasis liegt.

4. Die expandierten Harzteilchen auf Polypropylenbasis, umfassend:
nicht weniger als 1,0 Gew.-Teile und nicht mehr als 25 Gew.-Teile Ruß und nicht weniger als 0,05 Gew.-Teile und nicht mehr als 1,0 Gew.-Teile von einem oder beiden von Magnesiumhydroxid und Magnesiumcarbonat, bezogen auf 100 Gew.-Teile eines Harzes auf Polypropylenbasis, wobei die expandierten Teilchen des Harzes auf Polypropylenbasis eine Oberflächenfarbe aufweisen, die den folgenden (a), (b) und (c) genügt:

(a) RGB (Max) $\leq$ 230, wobei RGB (Max) den höchsten Wert unter den Werten von R, G und B darstellt;
(b) RGB (Min) $\geq$ 70, wobei RGB (Min) den niedrigsten Wert unter den Werten von R, G und B darstellt; und
(c)

$$RGB\ (Max) - RGB\ (Min) \leq 20;$$

wobei RGB (Max) und RGB (Min) wie in der Beschreibung angegeben bestimmt werden.

5. Die expandierten Harzteilchen auf Polypropylenbasis nach Anspruch 4 mit einer Oberflächenfarbe, die die folgenden ($\alpha$) erfüllt:

$$(\alpha) \quad RGB\ (Max)i - RGB\ (Min)i \leq 50;$$

wobei RGB (Max)i und RGB (Min)i wie in der Beschreibung angegeben bestimmt werden.

6. Die expandierten Harzteilchen auf Polypropylenbasis nach Anspruch 4 oder 5, die einen durchschnittlichen Zelldurchmesser von mindestens 100 $\mu$m und höchstens 500 $\mu$m aufweisen.

7. Ein geschäumtes, geformtes Produkt, hergestellt aus expandierten Harzteilchen auf Polypropylenbasis gemäß einem der Ansprüche 4 bis 6.

**Revendications**

1. Méthode pour produire des particules expansées en résine à base de polypropylène, comprenant les étapes suivantes :

(i) obtention d'une bouillie en dispersion par dispersion de particules en résine à base de polypropylène et de dioxyde de carbone dans un milieu aqueux de dispersion dans un récipient fermé, les particules en résine à base de polypropylène contenant au moins 1,0 partie en poids et au plus 25 parties en poids de noir de carbone, et au moins 0,05 partie en poids et au plus 1,0 partie en poids de l'un ou des deux parmi l'hydroxyde de magnésium et le carbonate de magnésium pour 100 parties en poids d'une résine à base de polypropylène ;

(ii) chauffage et pressurisation de la bouillie en dispersion ; et

(iii) libération des particules en résine à base de polypropylène contenues dans la bouillie en dispersion, dans une région sous une pression inférieure à la pression interne du récipient fermé.

2. Méthode selon la revendication 1, dans laquelle le milieu aqueux de dispersion est l'eau.

3. Méthode selon la revendication 1 ou 2, dans laquelle la bouillie en dispersion est chauffée à une température non inférieure au point de ramollissement des particules en résine à base de polypropylène.

4. Particules expansées en résine à base de polypropylène, comprenant :

au moins 1,0 partie en poids et au plus 25 parties en poids de noir de carbone, et au moins 0,05 partie en poids et au plus 1,0 partie en poids de l'un ou des deux parmi l'hydroxyde de magnésium et le carbonate de magnésium pour 100 parties en poids d'une résine à base de polypropylène, les particules expansées en résine à base de polypropylène ayant une couleur en surface satisfaisant à (a), (b) et (c) qui suivent :

(a) RVB (Max) ≤ 230, où RVB (Max) représente la valeur maximale parmi les valeurs de R, V et B ;
(b) RVB (Min) ≥ 70, où RVB (Min) représente la valeur minimale parmi les valeurs de R, V et B ; et
(c)

$$RVB\,(Max) - RVB\,(Min) \le 20 \; ;$$

dans lesquelles RVB (Max) et RVB (Min) sont déterminées comme indiquées dans le fascicule.

5. Particules expansées en résine à base de polypropylène selon la revendication 4, ayant une couleur en surface satisfaisant à (a) qui suit :

$$(\alpha)\;RVB\,(Max)i - RVB\,(Min)i \le 50 \; ;$$

dans lesquelles RVB (Max)i et RVB (Min)i sont déterminées comme indiquées dans le fascicule.

6. Particules expansées en résine à base de polypropylène selon la revendication 4 ou 5, ayant un diamètre d'alvéole moyen non inférieur à 100 $\mu$m et non supérieur à 500 $\mu$m.

7. Produit moulé expansé fait à partir de particules expansées en résine à base de polypropylène telles que définies dans l'une quelconque des revendications 4 à 6.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7300537 A
- JP 2013035949 A
- JP 2008266478 A
- JP 6192462 A
- JP 2009019203 A
- US 20150210815 A1